# EUROPEAN PATENT SPECIFICATION

(11) **EP 0 485 997 B1**
(45) Date of publication and mention of the grant of the patent: **26.03.1997**
(21) Application number: 91119371.2
(22) Date of filing: 13.11.1991
(51) Int. Cl.: B41J 11/42, B41J 13/28, G06K 15/00

(54) **Printer control device and method for controlling a printer**
Druckersteuereinheit und Verfahren zum Steuern eines Druckers
Commande de l'imprimante et procédé pour commander imprimante

(30) Priority: 16.11.1990 JP 310509/90; 13.02.1991 JP 19841/91
(43) Date of publication of application: 20.05.1992
(73) Proprietor: SEIKO EPSON CORPORATION, Shinjuku-ku Tokyo-to (JP)
(72) Inventor: Yawata, Kazunari, Suwa-shi, Nagano-ken (JP)
(74) Representative: Hoffmann, Eckart, Dipl.-Ing.

(56) References cited:
- EP-A- 0 228 489
- EP-A- 0 312 407
- EP-A- 0 420 336
- US-A- 4 934 845

## Description

The invention relates to a printer control device for a printer adapted to work with a variety of paper sources and/or a variety of types of paper, and to a method for controlling such printer.

Such printer control devices may have two or more paper detectors for detecting presence or absence of paper, for controlling the printing operation of the printer based on the condition of those paper detectors and for notifying a host computer of the condition of the paper detectors. These printer control devices do not have means for selecting a desired paper detector among the two or more existing paper detectors, and the presence or absence of paper is actually detected by means of a preset selection means.

The selection means may be adapted to indicate absence of paper when all of the paper detectors detect absence of paper, or to indicate absence of paper if at least one of the paper detectors detects absence of paper. Control of the printing operation of the printer is performed based on the presence or absence of paper as indicated by the preset selection means.

For notifying a host computer of the presence or absence of paper, one possibility is to transmit the condition indicated by the preset selection means via one transmission line, while another possibility is to have respective transmission lines associated with each of the paper detectors.

Were the host computer and the printer control device are integrated into a stand-alone system, it is no problem to increase the terminals for paper detectors because the control device can be connected to the printer with special signal lines including individual lines for each paper detector. Early point-of-sale (POS) terminals are an example of such stand-alone systems. Nowadays personal computers are more and more used even for POS terminals. Personal computers are connected to printers via standard interfaces of which the parallel interface, the so-called "Centronics" interface is the most common one. This parallel interface provides only one signal line (commonly referred to as PE) for transmitting information about presence or absence of paper to the personal computer.

The above mentioned selection means can be used in a personal computer system employing the parallel interface. This would require, however, that the selection means be preset to one of plural paper detectors and does not allow to select a desired paper detector by means of a control command from the personal computer.

The document EP-A-0 420 336 discloses, as prior art, a printing apparatus having multiple paper feeding paths and a plurality of paper detectors. The paper detectors are used for detecting presence or absence of paper and for controlling paper feeding. To avoid necessity of a plurality of paper detectors the document suggests using one paper detector for detecting presence and absence of paper in combination with a paper run detector putting out, as paper is being fed, a number of pulses corresponding to the amount of fed paper. In case of multiple paper feeding paths, these two devices are arranged at locations common to all the paper feeding paths.

US-A-5,126,786 discloses an image forming system connected to a host system. The image forming system is characteristic in having more or less optional units mainly for feeding recording media to and ejecting the recording media from a print engine. The optional units are each intelligent units, each having its own CPU, adapted to communicate with a controller of the print engine. The optional units include a sensor and a switch and are able or unable to detect presence or absence of a recording medium. Each optional unit can be individually addressed by the print engine's controller including inquiry of the status of the respective optional unit. Although not explained in detail in the document, this may mean that the print engine's controller can selectively detect the status of two or more paper detectors corresponding to two or more optional units. Two different embodiments of this image forming system are disclosed, one embodiment in which it has a controller connected to the host system by such as a Centronics interface on the one hand and to the print engine's control system on the other hand. The main purpose of the controller is image processing, i.e. converting character code data received from the host system into image data for the print engine. In a second embodiment the image processing function is part of the host system rather than the image forming system. In the latter case the image forming system substantially consists of the print engine and the optional units.

It is an object of the present invention to provide a printer control device and a method for controlling a printer that allow selection of a specified paper detector among plural paper detectors based on a control command from the host computer and to notify the host computer about the condition of the selected paper detector by using one transmission line so that a standard parallel interface can be employed.

This object is achieved with a printer control device and methods as claimed.

The present invention is especially, though not exclusively, useful for newer POS printers which can work with a variety of paper sources. These printers were hard to control in the past because the individual paper status of each paper source could not be polled. The system had to assume the paper was ready, and very often it was not.

A preferred embodiment of the present invention will be described below with reference to the drawings, in which:
- Fig. 1: is a block diagram of an embodiment of the present invention,
- Fig. 2: is a simplified diagram of the detector selection means, stop control means and transmission control means according to the invention,
- Fig. 3: is a flowchart for explaining the detector selection according to the invention,
- Fig. 4: is a flowchart for explaining the stop control according to the invention,
- Fig. 5: is a flowchart for explaining the transmission control according to the invention,
- Fig. 6: is a table illustrating an example of a control command output from the host computer for the stop control means and
- Fig. 7: is a table illustrating an example of a control command output from the host computer for the transmission control means.

In Fig. 1, 1, 2 and 3 are paper detectors assuming a first state when they detect a paper absent condition and a second state when they detect a paper present condition, and outputting a corresponding signal to a detector selection means 4. It should be noted, that three paper detectors are shown as an example only and that two paper detectors or more than three paper detectors may be employed. The detector selections means 4 selects one of the paper detectors 1, 2 and 3 based on a control command received from a host computer 7 via an interface 6. A stop control means 8 stops the printing operation of a printing mechanism 9 based on the state of the paper detector selected by the detector selections means 4. A transmission control means 5 detects the state of the paper detector selected by the detector selections means 4 and notifies the host computer 7 via the interface 6 of the result as will be explained in more detail below.

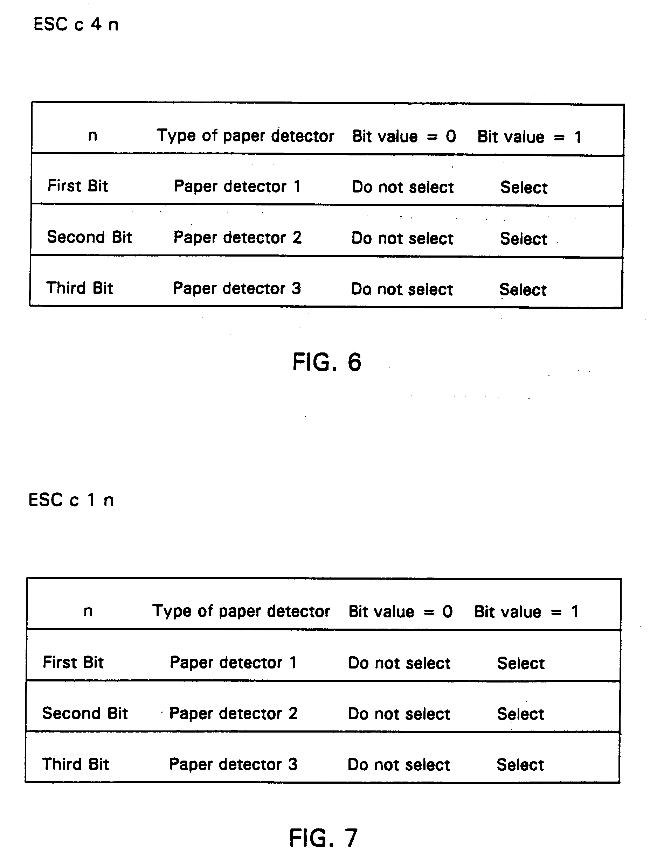

Fig. 6 shows a table illustrating an example of control command output from the host computer for the stop control means. [ESC + c + 4 + n] is the control command in which n is the argument for selecting which of the paper detectors is to be used for detecting presence or absence of paper. Fig. 6 shows how the argument n is used for selecting a desired paper detector. In this example each of the paper detectors 1, 2 and 3 is assigned a respective one of the bits of the argument n. If the respective bit is "1" the associated paper detector is selected, and if that bit is "0" the paper detector is not selected. This allows all combinations of paper detectors and provides for the possibility of selecting none of the paper detectors to create a condition in which no paper detector appears to be installed in the printer.

Fig. 7 is a table illustrating an example of a control command output from the host computer for the transmission control means. [ESC + c + 1 +n] is the command, wherein n is the argument by which the paper detector is selected that is to detect presence or absence of paper. In a manner similar as in Fig. 6, each paper detector is assigned a respective bit of the argument n. If a respective bit is "1" the associated paper detector is selected, and if that bit is "0" the paper detector is not selected. Again, this allows all combinations of paper detectors including the possibility of selecting none of the paper detectors useful for printer types having no paper detector installed.

It will be clear to those skilled in the art that the above mentioned examples of control commands are based on the well-known software interface EPSON ESC/P for the parallel interface.

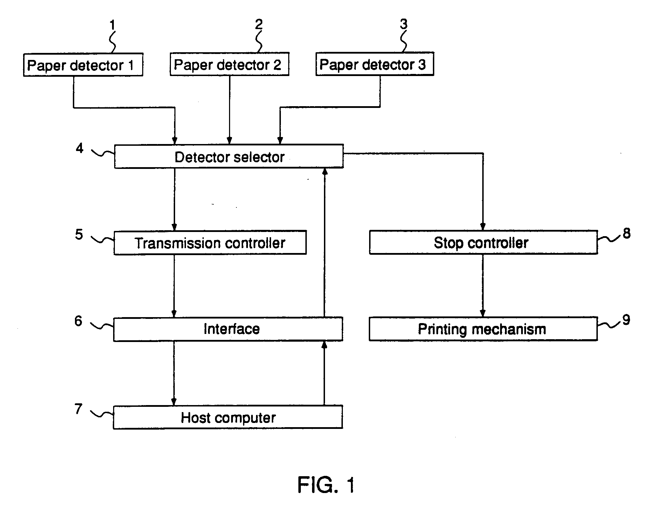

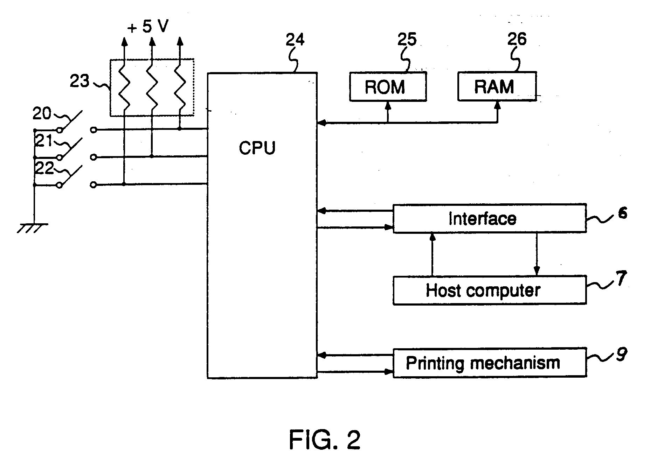

Fig. 2 is a block diagram of a circuit where the detector selection means 4, the transmission control means 5 and the stop control means 8 of Fig. 1 are implemented by means of a microcomputer made up of a CPU 24, a ROM 25 and RAM 26. In Fig. 2, 20, 21 and 22 are paper detector switches which, in combination with pullup resistors 23, form the paper detectors 1, 2 and 3 of Fig. 1. In case of a no-paper condition, the respective switch is in an open state to apply a high level input to the CPU 24. It should be noted, that other kinds of paper detectors, for instance optical paper detectors may be used. The microcomputer receives signals from the paper detectors indicating the presence or absence of paper, and control commands from the host computer 7 via the interface 6. The microcomputer selects the paper detectors depending on a received control command, stops the printing operation of the printing mechanism 9 based on the condition of the paper detectors, detects the condition of the paper detectors and notifies the host computer of that condition. ROM 25 stores the programs for deciphering the control commands from the host computer shown in Figs. 6 and 7 and for selecting only the required paper detector, for stopping the printing operation of the printing mechanism 9 based on the condition of the selected paper detector and for notifying the host computer 7 of the condition of the paper detector. RAM 26 stores the flags, ect., required by these programs, as a temporary memory.

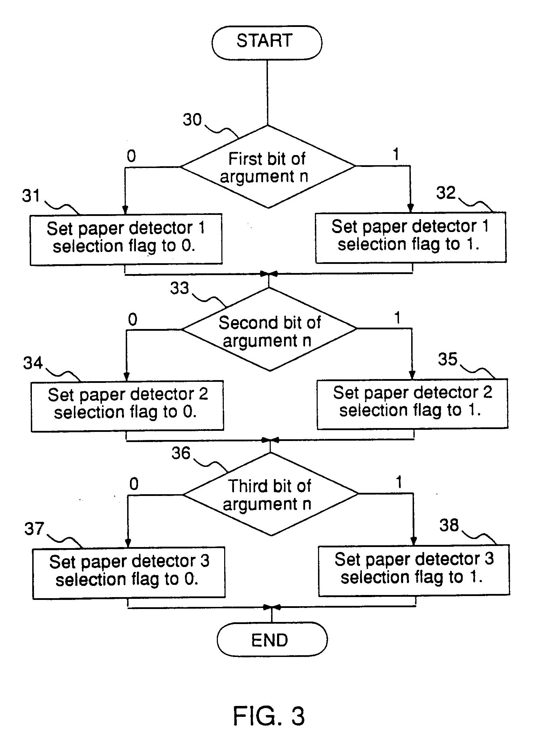

Referring now to the flowcharts in Figs. 3, 4 and 5, the operation of the above described printer control device will be explained. When the CPU receives a specific ESCAPE sequence control command (explained before), it will interprete the data following that sequence as an argument for paper detector selection.

As shown in Fig. 3, the detector selection means judges the value of the first bit of the argument n in the control command of either Fig. 6 or Fig. 7 based on the result of deciphering the control command from the host computer (step 30). If the result is "0" the detector selection means sets the paper detector 1 selection flag to "0", which indicates that the paper detector 1 has not been selected (step 31). If the result is "1" the flag is set to "1" (step 32). The detector selection means than judges the second bit (step 33) and sets the paper detector 2 selection flag correspondingly (step 34 or 35). Than the detector selection means judges the third bit (step 36) and sets the paper detector 3 selection flag correspondingly (step 37 or 38).

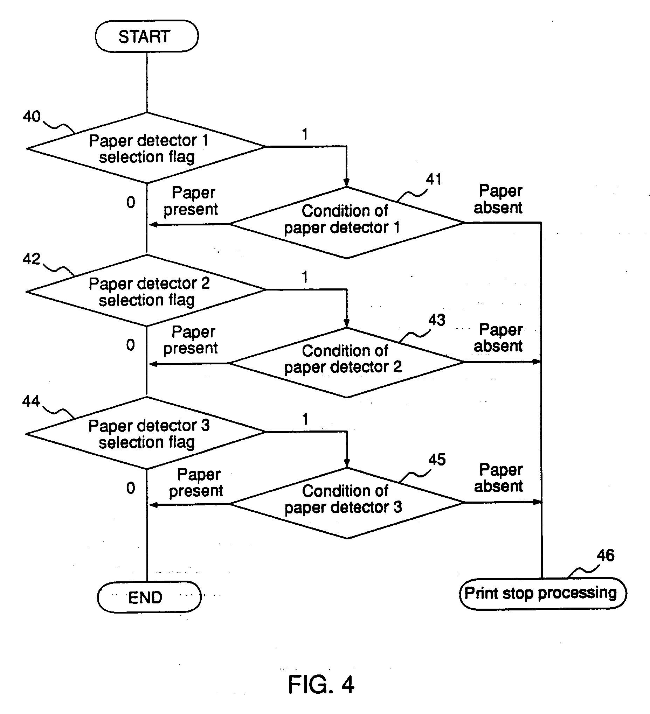

As shown in Fig. 4, the stop control means judges by the states of the paper detector selection flags on which paper detector to base processing of print stopping.

First the paper detector 1 selection flag is judged (step 40), and if the result is "0" the processing moves to step 42. However, if the result is "1" the condition of paper detector 1 is detected and judged (step 41). If the result is "paper present" the processing moves to step 42, but if the result is "paper absent", than the print stop processing is executed (step 46).

If the processing moves to step 42, the state of the paper detector 2 selection flag is judged, and if the result is "0" the processing moves to step 44. However, if the result is "1" the condition of paper detector 2 is detected and judged (step 43). If the result is "paper present", than the processing moves to step 44. If, however, the result is "paper absent", than the print stop processing is executed (step 46).

If the processing moves to step 44, the state of the paper detector 3 selection flag is judged, and if the result is "0" the processing terminates. However, if the result is "1" the condition of paper detector 3 is detected and judged (step 45). If the result is "paper present", than the processing terminates. Otherwise, if the result is "paper absent" than the print stop processing is executed (step 46).

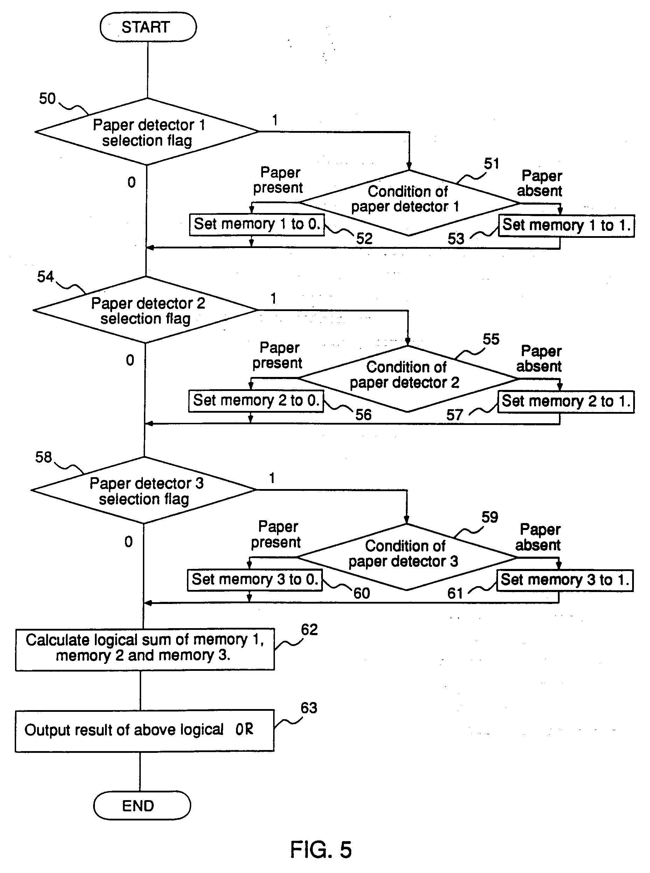

As shown in Fig. 5, the transmission control means judges by the states of the paper detector selection flags which paper detector's state will be reported to host computer.

The state of the paper detector 1 selection flag is judged in step 50, and if the result "0" the processing moves to step 54. If the result is "1" the condition of paper detector 1 is judged. If the result is "paper present", a "0" is set in a memory 1 (step 52), but if the result is "paper absent" a "1" is set in memory 1 and the processing moves to step 54.

In step 54 the state of the paper detector 2 selection flag is judged, and if the result is "0" the processing moves to step 58. If the result is "1" the condition of paper detector 2 is judged (step 55). If the result is "paper present" a "0" is set in a memory 2 (step 56), but if the result is "paper absent", a "1" is set in memory 2 (step 57) and the processing moves to step 58.

In step 58 the state of the paper detector 3 selection flag is judged, and if the result is "0" the subsequent processing is executed. If the result is "1" the condition of paper detector 3 is judged (step 59). If the result is "paper present", a "0" is set in a memory 3 (step 60), but if the result is "paper absent", a "1" is set in memory 3 (step 61).

When the subsequent processing is executed, the logical OR of memories 1, 2 and 3 is calculated (step 62) and the result is sent to the host computer via the interface (step 63).

The flowcharts of Figs. 3, 4 and 5 are for embodiments with three paper detectors. In case of more than three paper detectors, judgement of control commands and setting of paper detector selection flags is repeated by a number of times corresponding to the number of paper detectors. Following this, the judgment of paper detector selection flags, detection and judgment of the condition of paper detectors and the processing of print stop based on the results are repeated by a number of times corresponding to the number of paper detectors. Further, judgement of paper detector selection flags and detection of the condition of paper detectors are correspondingly repeated prior to reporting the result to the host computer.

By means of the invention any desired combination of paper detectors that detect the presence or absence of paper in a printer can be selected by control commands from the host computer. This makes it possible to stop printing operation of the printer based only on the condition of the paper detectors required at that time.

Also, the condition of one ore more paper detectors can be reported to the host computer using only one single line of a transmission line connected to the host computer, thus reducing costs and facilitating flexible control by the host computer.

Moreover, since the paper detectors required to stop printing and the paper detectors required to notify the host computer can be selected separately, control by the host computer can be further expanded.

## Claims

1. A printer control device for a printer capable of working with multiple types of paper, said control device comprising two or more paper detectors (1, 2, 3) that detect the presence or absence of paper and being characterized by comprising:
an interface (6) for connection to a host computer (7) via a transmission line and for receiving data from the host computer (7), and a detector selection means (4) that selects only a specified detector among the paper detectors based on a control command from the host computer.

2. A printer control device according to claim 1, comprising stop control means (8) that stops printing based on the condition of the paper detector (1, 2, 3) selected by the detector selection means (4).

3. A printer control device according to claim 1 or 2, comprising transmission control means (5) that transmits the condition of the paper detector (1, 2, 3) selected by the detector selection means (4) to the host computer.

4. A method for controlling a printer having plural paper detectors and being connected to a host computer (7) by means of an interface (6) providing one transmission line for sending a no-paper signal to the host computer, said method comprising the steps of:
a) selecting one or more of said plural paper detectors (1, 2, 3) by a specific control command sent from the host computer (7) to the printer,
b) checking the condition of the or each selected paper detector, and
c) performing a print stop process when the or any of the selected paper detectors indicates a no-paper condition.

5. A method according to claim 4, further comprising the steps of:
d) calculating the logical OR of the results of step b), and
e) sending the result of step d) via said one transmission line to the host computer (7).

6. A method for controlling a printer having plural paper detectors (1, 2, 3) and being connected to a host computer (7) by means of an interface (6) providing one transmission line for sending a no-paper signal to the host computer, said method comprising the steps of:
a) selecting one or more of said plural paper detectors by a specific control command sent from the host computer to the printer,
b) checking the condition of the or each selected paper detector,
c) calculating the logical OR of the results of step b), and
d) sending the result of step c) via said one transmisison line to the host computer.

## Patentansprüche

1. Druckersteuereinheit für einen Drucker, der zur Handhabung einer Vielzahl von Papierarten in der Lage ist, wobei die Steuereinheit zwei oder mehr Papierdetektoren (1, 2, 3) umfaßt, die das Vorhanden- oder Nichtvorhandensein von Papier feststellen, und gekennzeichnet durch:
eine Schnittstelle (6) zur Verbindung mit einem Hostcomputer (7) über eine Übertragungsleitung und zum Empfang von Daten vom Hostcomputer (7), und Detektorauswahlmittel (4), die nur einen spezifizierten Detektor unter den Papierdetektoren auf der Grundlage eines Steuerbefehis vom Hostcomputer auswählen.

2. Druckersteuereinheit gemäß Anspruch 1, umfassend Stoppsteuermittel (8), die den Druck auf der Grundlage des Zustands des von den Detektorauswahlmitteln (4) ausgewählten Papierdetektors (1, 2, 3) stoppen.

3. Druckersteuereinheit gemäß Anspruch 1 oder 2, umfassend Übertragungssteuermittel (5), die den Zustand des von den Papierauswahlmitteln (4) ausgewählten Papierdetektors (1, 2, 3) an den Hostcomputer übertragen.

4. Verfahren zum Steuern eines Druckers, der mehrere Papierdetektoren aufweist und mit einem Hostcomputer (7) mittels einer Schnittstelle (6) verbunden ist, die mit einer Übertragungsleitung zum Senden eines Kein-Papier-Signals an den Hostcomputer versehen ist, wobei das Verfahren die Schritte umfaßt:
a) Auswählen eines oder mehrerer der mehreren Papierdetektoren (1, 2, 3) durch einen speziellen Steuerbefehl, der von Hostcomputer (7) an den Drucker geschickt wird,
b) Überprüfen des Zustands des oder jedes ausgewählten Papierdetektors, und
c) Durchführen eines Druckstopprozesses, wenn der oder irgendeiner der ausgewählten Papierdetektoren einen Kein-Papier-Zustand anzeigt.

5. Verfahren gemäß Anspruch 4, ferner umfassend die Schritte:
d) Berechnen des logischen ODER der Ergebnisse von Schritt b), und
e) Senden des Ergebnisses von Schritt d) über die eine Übertragungsleitung an den Hostcomputer (7).

6. Verfahren zum Steuern eines Druckers, der mehrere Papierdetektoren (1, 2, 3) aufweist und mit einem Hostcomputer (7) mittels einer Schnittstelle (6) verbunden ist, die mit einer Übertragungsleitung zum Senden eines Kein-Papier-Signals an den Hostcomputer versehen ist, wobei das Verfahren die Schritte umfaßt:
a) Auswählen eines oder mehrerer der mehreren Papierdetektoren durch einen speziellen Steuerbefehl, der vom Hostcomputer (7) an den Drucker geschickt wird,
b) Überprüfen des Zustands des oder jedes ausgewählten Papierdetektors,
c) Berechnen des logischen ODER der Ergebnisse von Schritt b), und
e) Senden des Ergebnisses von Schritt c) über die eine Übertragungsleitung an den Hostcomputer.

## Revendications

1. Dispositif de commande d'impression pour une imprimante pouvant travailler avec des types de papier multiples, le dispositif de commande comportant deux ou plusieurs capteurs (1, 2, 3) de papier qui détectent la présence ou l'absence du papier et étant caractérisés par le fait de comprendre:
une interface (6) pour la connection à un ordinateur (7) hôte par l'intermédiaire d'une ligne de transmission et pour recevoir des données de l'ordinateur (7) hôte, et des moyens (4) de sélection de capteur qui choisissent un seul capteur spécifié parmi les capteurs de papier en fonction de l'envoi d'une commande par l'ordinateur hôte.

2. Dispositif de commande d'impression suivant la revendication 1; comportant des moyens (8) de commande d'arrêt qui arrêtent l'impression en fonction de l'état du capteur (1, 2, 3) de papier qui a été choisi par les moyens (4) de sélection de capteur.

3. Dispositif de commande d'impression suivant la revendication 1 ou 2, comportant des moyens (5) de commande de transmission qui transmettent l'état du détecteur (1, 2, 3) de papier choisi par les moyens (4) de sélection de capteur à l'ordinateur hôte.

4. Procédé pour commander une imprimante ayant une pluralité de capteurs de papier et étant connectée à un ordinateur (7) hôte au moyen d'un interface (6) fournissant une ligne de transmission pour envoyer un signal de non-papier à l'ordinateur hôte, ce procédé comportant les étapes qui consistent à:
a) choisir un ou plusieurs capteurs parmi la pluralité de capteurs (1, 2, 3) de papier par l'envoi d'une commande spéciale de l'ordinateur (7) hôte à l'imprimante,
b) surveiller l'état du ou de chacun des capteurs de papier choisis, et
c) réaliser un processus d'arrêt d'impression lorsque le ou n'importe lequel des capteurs de papier choisi indique un état de non-papier.

5. Procédé suivant la revendication 4 comportant en outre les étapes qui consistent à:
d) calculer la somme logique OU des résultats de l'étape b), et
e) envoyer le résultat de l'étape d) par l'intermédiaire d'une ligne de transmission à l'ordinateur (7) hôte.

6. Procédé pour commander une imprimante ayant une pluralité de capteurs (1, 2, 3) de papier et étant connectée à un ordinateur (7) hôte au moyen d'un interface (6) fournissant une ligne de transmission pour envoyer un signal de non-papier à l'ordinateur hôte, ce procédé comportant les étapes qui consistent à:
a) choisir un ou plusieurs capteurs parmi la pluralité de capteurs de papier par l'envoi d'une commande spéciale de l'ordinateur hôte à l'imprimante,
b) surveiller l'état du ou de chacun des capteurs de papier choisis,
c) calculer le résultat de la somme logique OU des résultats de l'étape b), et
d) envoyer le résultat calculé à l'étape c) par l'intermédiaire d'une ligne de transmission à l'ordinateur hôte.
